Europäisches Patentamt

European Patent Office

Office européen des brevets

(19)

(11) EP 0 584 897 B1

(12) **EUROPÄISCHE PATENTSCHRIFT**

(45) Veröffentlichungstag und Bekanntmachung des Hinweises auf die Patenterteilung:
**16.10.1996 Patentblatt 1996/42**

(51) Int Cl.⁶: **G01N 21/37**, G01N 21/35

(21) Anmeldenummer: **93250208.1**

(22) Anmeldetag: **14.07.1993**

(54) **Nichtdispersives Infrarotspektrometer**

Non-dispersive infrared spectrometer

Spectromètre infrarouge non-dispersif

(84) Benannte Vertragsstaaten:
**DE FR GB IT NL**

(30) Priorität: **22.07.1992 DE 4224146**

(43) Veröffentlichungstag der Anmeldung:
**02.03.1994 Patentblatt 1994/09**

(73) Patentinhaber: **MANNESMANN Aktiengesellschaft**
**40213 Düsseldorf (DE)**

(72) Erfinder:
- **Fabinski, Walter, Dipl.-Ing.**
  **D-65830 Kriftel (DE)**
- **Wiegleb, Gerhard, Dr.rer.nat.**
  **D-61267 Neu-Anspach (DE)**
- **Hering, Peter, Prof.Dr.**
  **D-85748 Garching (DE)**
- **Fuss, Werner, Dr.**
  **D-85748 Garching (DE)**

- **Haisch, Michael**
  **D-40229 Düsseldorf (DE)**

(74) Vertreter: **Meissner, Peter E., Dipl.-Ing. et al**
**Meissner & Meissner,**
**Patentanwaltsbüro,**
**Postfach 33 01 30**
**14171 Berlin (DE)**

(56) Entgegenhaltungen:
**DE-A- 1 297 362          GB-A- 734 578**
**GB-A- 2 218 514**

- **ANALYTICAL CHEMISTRY, Bd. 58, Nr. 11, September 1986, Columbus US, Seiten 2172-2178; C.S. IRVING et al.: "Measurement of 13CO2/12CO2 abundance by nondispersive infrared heterodyne ratiometry as an alternative to gas isotope ratio mass spectrometry"**

**Beschreibung**

Die Erfindung betrifft ein Verfahren sowie eine Einrichtung zur selektiven Bestimmung eines Isotopenanteiles eines Meßgases mit Hilfe der nichtdispersiven Infrarotspektroskopie gemäß Oberbegriff der Patentansprüche 1 und 4.

Die selektive Isotopenanteilbestimmung hat in Biologie, Geologie und Achäologie, und seit neuester Zeit sogar in der Medizin einen besonderen Stellenwert eingenommen. Die sogenannte $^{13}$C-Methode, welche in der Geologie und Archäologie seit langem etabliert ist, wird als Methode zur Altersbestimmung toter Materie herangezogen. Seit geraumer Zeit benutzt man stabile Isotopen außerdem als Markierung, um Stoffwechselvorgänge in lebender Materie, beispielsweise in der Medizin, untersuchen zu können.

Bei der Verwendung von Isotopen in der Medizin bzw. in der Biologie, daß heißt in lebender Materie schlechthin, ist es wesentlich, stabile Isotopen zu verwenden. In vielen Fällen sind dies das Stickstoffisotop $^{15}$N oder das Kohlenstoffisotop $^{13}$C. Instabile, also radioaktive Isotope, bringen durch ihren radioaktiven Zerfall lokal Energie ein, die die Stoffwechselvorgänge verändert, oder chemische Bindungen aufbricht. Bei der Verwendung in der Medizin ist der Einsatz von Radioisotopen generell verboten. Populär geworden ist mittlerweile die Verwendung von $^{13}$C als Markierungselement zur Diagnostik von Stoffwechselkrankheiten oder von Krankheiten des Gastrointestinalen Systems beim Menschen. Besonders erfolgreich ist der Einsatz von $^{13}$C als Markierungselement zur Diagnostik von infektiösen Magenkrankheiten wie beispielsweise Helicobacter pylory-Infektionen. Diese Infektionen können einfach nach einer Gabe von $^{13}$C-markierten Harnstoffs über die Expirationsluft von Patienten diagnostiziert werden, was eine aufwendige Gastroskopie überflüssig macht.

Bei diesen sowie auch bei anderen Anwendungen werden aufgrund der Anforderungen an die Selektivität der Meßmethode massenspektrometrische Verfahren eingesetzt. Diese sind aufgrund der Erzeugung von Hochvakuum und der aufwendigen Probenpräparation sowie der technisch aufwendigen Analysatorgestaltung teuer und daher in vielen Laboratorien kaum realisierbar.

Des weiteren ist bekannt, zur selektiven Isotopenanteilsbestimmung insbesondere bei der Bestimmung des $^{13}$C/$^{12}$C-Verhältnisses eine rein optische Methode, nämlich die nichtdispersive Infrarotspektroskopie einzusetzen. Eine solche Möglichkeit ist bereits in Chemical Abstract (VOL.90, 1979, No. 90: 37 27 6d, Helge at all) beschrieben. Der Einsatz und die Konditionierung von nichtdispersiver Infrarotspektroskopie ist auch aus dem US-Patent 4 289 347 bekannt. Nachteilig ist bei diesen bekannten Apparaturen bzw. Verfahren, daß die Selektivität bzw. die Empfindlichkeit des Infrarotspektrometers nicht immer eine sichere Messung bzw. eine sichere Diagnose ermöglicht.

Der Erfindung liegt daher die Aufgabe zugrunde, ein Verfahren sowie eine Einrichtung zur selektiven Bestimmung eines Isotopenanteiles eines Meßgases unter Beibehaltung eines einfachen Aufbaus anzugeben, das die Selektivität und die Meßempfindlichkeit erheblich steigert.

Die gestellte Aufgabe wird hinsichtlich eines Verfahrens erfindungsgemäß durch die kennzeichnenden Merkmale des Patentanspruches 1 gelöst. Weitere vorteilhafte Ausgestaltungen des Verfahrens sind in den Unteransprüchen 2 und 3 angegeben. Hinsichtlich eines nichtdispersiven Infrarotspektrometers ist die gestellte Aufgabe erfindungsgemäß durch die kennzeichnenden Merkmale des Patentanspruches 4 gelöst. Weitere vorteilhafte Ausgestaltungen sind in den übrigen Unteransprüchen angegeben. Hierbei wird der an sich bekannte Aufbau eines nichtdispersiven Infrarotspektrometers verwendet, und um entsprechende Elemente ergänzt. Eines der grundsätzlichen Probleme, das bei einer Empfindlichkeitssteigerung eines nichtdispersiven Infrarotspektrometers zur Bestimmung von Isotopenkonzentrationen überwunden werden muß, ist die große Querempfindlichkeit des markierten und des unmarkierten Gases. Diese wird durch den großen Überlapp der Infrarotspektren verursacht, der seinerseits auf dem geringen Massenunterschied der Gase beruht.

Ein zusätzlicher Effekt, der hier problematisch ist, ist die Trägergasabhängigkeit. Diese Effekte wurden durch die erfindungsgemäße Kombination einer optischen Filterung mit einer anschließenden elektronischen Signalbeeinflussung erheblich reduziert. Die Ausführung und die Funktion der erfindungsgemäßen Einrichtung werden im folgenden am Beispiel der $^{13}$CO$_2$/$^{12}$CO$_2$-Messung erläutert, gelten aber sinngemäß auch für andere Gase. Das optische Filter besteht aus einem im 1. Strahlengang, in welchem der $^{13}$CO$_2$-Detektor angeordnet ist, zusätzlich angeordneten Filter, welches mit $^{12}$CO$_2$ gefüllt ist. Die Querempfindlichkeit gegen das mit circa 3-5 Vol% im Meßgas vorhandene $^{12}$CO$_2$ ergibt eine Fehlanzeige von bis zu 300 ppm $^{13}$CO$_2$. Die Minimierung genau dieses Störeffektes ist durch die Einbringung des Filters bzw. der Filterküvette, welche mit 100 Vol% $^{12}$CO$_2$ gefüllt ist und in den Strahlengang integriert wird, erreicht. Diese Filterung verringert bei dieser Meßanordnung den Störeinfluß von 5 Vol% $^{12}$CO$_2$ auf circa 50 ppm $^{13}$CO$_2$. Die $^{12}$CO$_2$-Konzentration wird dabei in dem 2. Strahlengang gemessen. Der Meßbereich ist circa 100 mal größer als der $^{13}$CO$_2$-Meßbereich, so daß Querempfindlichkeiten von $^{13}$CO$_2$ im zweiten Strahlengang vernachlässigbar sind. Zur Korrektur der verbleibenden Querempfindlichkeit des $^{13}$CO$_2$-Kanals wird das elektrische Ausgangssignal dieses Kanals mit dem des $^{13}$CO$_2$-Kanal, in der in Anspruch 1 angegebenen Weise verrechnet. Damit verbleibt nun der Einfluß von $^{12}$CO$_2$ auf den $^{13}$CO$_2$-Kanal unter 1 ppm $^{13}$CO$_2$ über den Konzentrationsbereich zwischen 0 uns 5 Vol%. Neben der be-

nannten Querempfindlichkeit von $^{12}CO_2$ tritt noch eine Trägergasabhängigkeit auf. die sich mit etwa bis zu -5 % vom Meßwert/Vol% $^{12}CO_2$ als Einfluß auf die Empfindlichkeit auf den $^{13}CO_2$-Kanal auswirkt. Dieser Störeinfluß wird durch die erfindungsgemäßen Maßnahmen der positiven Filterung auf circa -2 % vom Meßwert/Vol% $^{12}CO_2$ reduziert. Durch die weitere Maßnahme der multiplikativen Verrechnung der Empfindlichkeit des $^{13}CO_2$-Kanals mit der $^{12}CO_2$-Konzentration wird eine Reduktion dieses Einflusses auf kleiner als 1 % über den Konzentrationsbereich von 0 bis 5 Vol% $^{12}CO_2$ erreicht werden.

Wegen Alterungserscheinungen im Meßsystem und bei Neuinstallation nach einem Transport stellt sich die Frage der Kalibrierung mit entsprechenden Prüfgasen. Diese wird erfindungsgemäß mit Hilfe von den Komponenten $^{13}CO_2$ und $^{12}CO_2$ gefüllten Kalibrierküvetten durchgeführt. Dazu wird von $CO_2$ befreite Raumluft aufgegeben.

Die Erfindung wird in der Zeichnung dargestellt und im Nachfolgenden näher beschrieben.

Es zeigt:

Figur 1 Ausgangssignal in Abhängigkeit der Konzentrationen von $^{13}CO_2$.

Figur 2 Querempfindlichkeit von $^{12}CO_2$ gegen $^{13}CO_2$ mit und ohne Filter.

Figur 3 Meßanordnung eines NDIR-Spektrometers

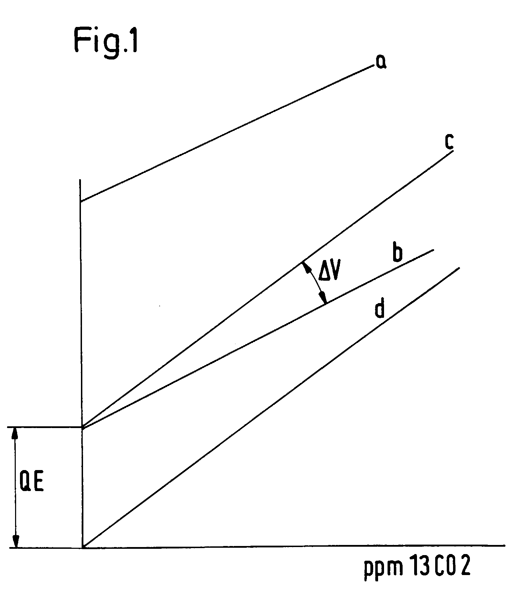

Figur 1 zeigt das Ausgangssignal in willkürlichen Einheiten als Funktion der Konzentration von $^{13}CO_2$. Die obere Kurve stellt den Ausgangssignalverlauf a ohne die erfindungsgemäßen Maßnahmen, das heißt mit einem herkömmlichen NDIR-Spektrameter ohne zusätzliche Filterküvetten und ohne elektronische Kompensation. dar. Der Verlauf b ergibt sich durch eine reine Offset-Verschiebung, die durch die zusätzliche im Meßstrahlengang des $^{13}CO_2$-Kanals eingebrachte Filterküvette, welche mit $^{12}CO_2$ gefüllt ist, bewirkt wird. Durch die nachgeordnete elektronische Kompensation die im Nachfolgenden noch näher beschrieben wird, erfolgt zunächst eine Drehung der Kurve b, um eine Verstärkungsfaktoränderung $\Delta V$. Somit wird der Verlauf b in den Verlauf c überführt.

Desweiteren wird durcn die elektrische Kompensation noch eine zweite Parallelverschiebung bewirkt, die die Querempfindlichkeit QE kompensiert und somit der Kurvenverlauf c letztendlich in den Kurvenverlauf d überführt. Dieser Kurvenverlauf d ist somit der kompensierte und korrigierte Ausgangssignalverlaut. Die bewirkte Drehung zur überführung des Verlaufes b in c ist die oben genannte Kompensation der Trägergasabhängigkeit, und die zweite Parallelverschiebung zur überführung des Verlaufes c in d ist die Kompensation der Querempfindlichkeit. Der durch das Kompensationsergebnis erreichte Verlauf d des Ausgangssignales entspricht einer Funktion

$$yd = u * {}^{13}CO_2$$

(wobei $^{13}CO_2$ in Einheiten einer Konzentration) Durch die Trägergasabhängigkeit und die Querempfindlichkeit liegt jedoch auch nach optischer Kompensation durch die Filterküvette der Ausgangssignalverlauf b vor. Dieser läßt sich funktional darstellen

$$yb = (u * {}^{13}CO_2) * (v * {}^{12}CO_2) + w * {}^{12}CO_2.$$

Der Faktor $v * {}^{12}CO_2$ stellt dabei die Trägergasabhängigkeit dar, die den Verstärkungsfaktor verfälscht, und die Drehung repräsentiert. Der Summand $w * {}^{12}CO_2$ stellt die Querempfindlichkeit dar, das heißt die Parallelverschiebung QE zum Verlauf d. Zum überführen des Verlaufes b in den Signalverlauf d werden die Korrekturfaktoren wie folgt eingebracht

$$yd' = (u * {}^{13}CO_2) * \frac{(v * {}^{12}CO_2)}{(\alpha * {}^{12}CO_2)} +$$

$$(w * {}^{12}CO_2) - \beta * {}^{12}CO_2$$

$\alpha$ und $\beta$ sind dabei die Korrekturfaktoren und für $\alpha = v$ erfolgt eine vollständige Korrektur der Trägergasabhängigkeit, das heißt der Bruch der Funktion yd wird 1; und bei $\beta = w$ erfolgt eine Korrektur der Parallelverschiebung. Damit entspricht die Funktion yd' der Funktion yd, das heißt die Kompensation ist abgeschlossen.

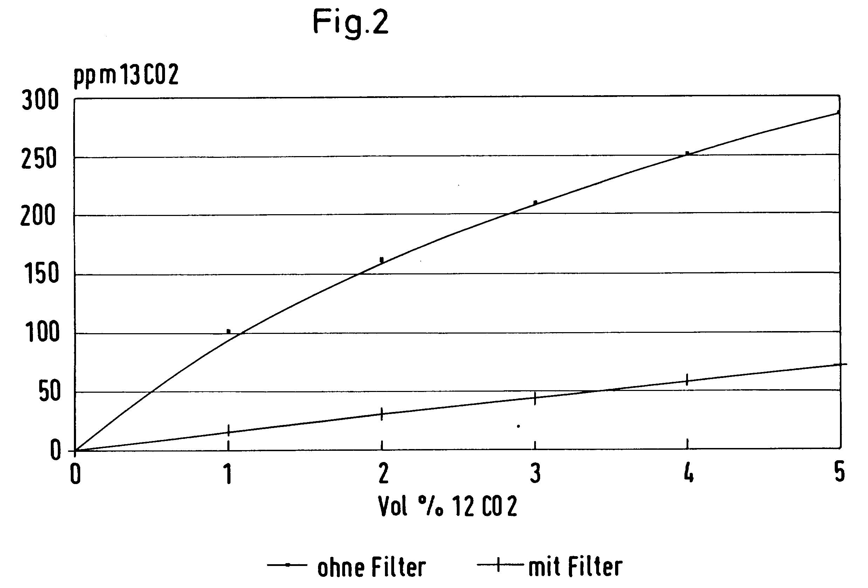

Figur 2 zeigt in anschaulicher Weise die Wirkung der Querempfindlichkeitsreduktion durch die erfindungsgemäßen optischen und elektronischen Maßnahmen. Figur 2 zeigt dabei die Querempfindlichkeit von $^{12}CO_2$ gegen $^{13}CO_2$. Aus dieser Darstellung ist beispielsweise zu erkennen, daß die Querempfindlichkeit bei einem Anteil von 5 Vol% $^{12}CO_2$ 300 ppm $^{13}CO_2$ entspricht. Für einen Anteil von 4 Vol% $^{12}CO_2$ entspricht dieser Wert 250 ppm $^{13}CO_2$ und verläuft für entsprechend andere Anteile an $^{12}CO_2$ entsprechend dem oberen Kurvenverlauf. Die im oberen Kurvenverlauf dargestellte Situation ist die durch ein nichtdispersives Infrarotspektrometer in selektiver Messung von $^{13}CO_2$ zu $^{12}CO_2$ auftretende Querempfindlichkeit. Durch die erfindungsgemäße Einbringung der zusätzlichen Filterküvette FK, welche mit $^{12}CO_2$ gefüllt ist, wird die Querempfindlichkeit gemäß dem oberen Kurvenverlauf in Figur 2 auf den unteren Kurvenverlauf in Figur 2 reduziert. Das heißt, diese Reduktion wird zunächst ohne elektronische Kompensation bewirkt. Wesentlich ist hierbei, daß durch die optische Kompensation nicht nur die Querempfindlichkeit dem Betrag nach reduziert wird, sondern daß neben der Reduktion der Steigung der Querempfindlichkeitskurve auch die Krümmung herauskompensiert wird. Das heißt, die mit den erfindungsgemäßen optischen Kompensationsmitteln erreichte Querempfindlichkeitsreduktion ist außerdem noch liniarisiert. Dieser liniarisierte Querempfindlichkeitsverlauf gestattet es eine lineare elektronische Kompensation der verbleibenden Querempfindlichkeit durchführen zu können. An dieser Stelle wird deutlich, daß sich die Maßnahme der optischen Kompensation mit der Maßnahme der elektronischen Kompensation ergänzend bedingen. Mit der nachgeordneten elektronischen Kompensation wird erreicht, daß der untere lineare Kurvenverlauf der Querempfindlichkeit dann zu quasi null nachkompensiert wird. Der Übergang vom oberen Kurvenverlauf zum unteren Kurvenverlauf in Figur 2 entspricht dem Übergang vom Ausgangssignalverlauf a in Figur 1 zum Ausgangssignalverlauf b in Figur 1. Der Übergang von Ausgangssignalverlauf b über c nach d erfolgt in der erfindungsgemäß angegebenen elektronischen Weise.

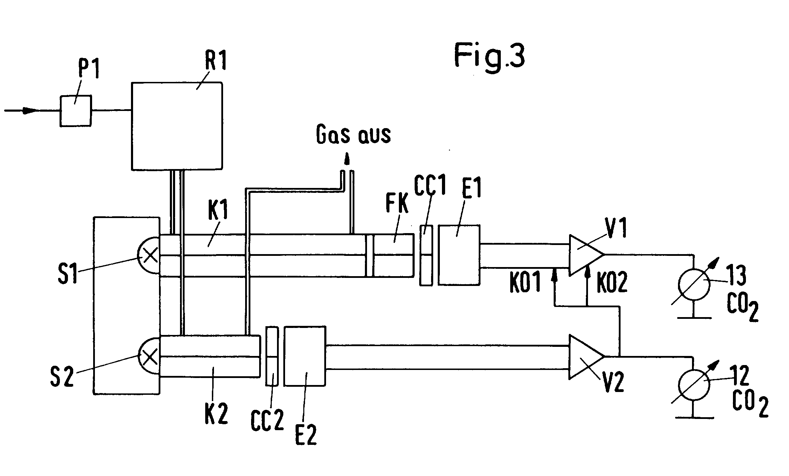

Figur 3 zeigt schematisch den erfindungsgemäßen Aufbau eines NDIR-Spektrometers wobei die nachgeschaltete elektronische Korrektur symbolisiert dargestellt ist. Der Aufbau zeigt zwei Strahlengänge, mit jeweils einer Strahlenquelle. Der obere Strahlengang dient zur Messung des $^{13}CO_2$-Anteiles und der untere Strahlengang zur Messung des $^{12}CO_2$-Anteiles.

In den oberen sowie den unteren Strahlengang sind Meßküvetten eingebracht, in die das entsprechend zu analysierende Gas parallel eingebracht ist. Das zu analysierende Gas wird dabei sowohl durch die Küvette K1 als auch K2 hindurchgeführt und am Ende auch wieder gemeinsam, das heißt parallel abgeführt. Im $^{13}CO_2$-Strahlengang ist der Küvette K1 eine Filterküvette FK nachgeordnet die im Meßstrahlengang mit 100 Vol% $^{12}CO_2$ gefüllt ist und die sogenannte positive optische Filterung vornimmt. Eine nachgeordnete in den Strahlengang einschwenkbare Kalibrierküvette CC1 ist mit $^{13}CO_2$ in Inertgas gefüllt. Der nachgeordnete Detektor E1 ist gefüllt mit $^{13}CO_2$ in Edelgas und ist somit auf $^{13}CO_2$ sensibilisiert. Der elektrische Ausgang des Detektors wird über einen Verstärker V1 bis zu einer symbolisierten Anzeige bzw. Auswertung geführt. Im zweiten Strahlengang ist der Küvette K2 eine in den Strahlengang einschwenkbare Kalibrierküvette CC2 nachgeordnet, welche mit $^{12}CO_2$ in Inertgas befüllt ist. Der nachgeordnete Detektor E2 ist mit $^{12}CO_2$ in Edelgas befüllt.

Am Gaseintritt ist desweiteren ein Mischreservoir R1 vorgesehen, in welchem das zu messende Gas vor Eintritt in die Küvetten K1 und K2 gesammelt wird. Das Reservoir R1 wird beispielsweise über eine Druckpumpe P1 mit Meßgas beschickt. Es wäre auch möglich,, die Pumpe P1 am Gasaustritt der Küvetten K1 und K2 anzuordnen, so daß das zu messende Gas direkt dem Reservoir R1 zugeführt wird, und dann über eine Saugpumpe durch die Küvetten K1 und K2 hindurchgesaugt wird. Wichtig ist hierbei generell, daß die Durchströmung der Küvetten gleichförmig erfolgt, obwohl - wie in Figur 3 sichtbar - das Volumen der Küvetten K1 und K2 unterschiedlich ist. Die Durchströmung muß deshalb in beiden Küvetten K1 und K2 gleichförmig erfolgen, da ansonsten die erfindungsgemäße elektronische Kompensation zwischen dem $^{12}CO_2$ und dem $^{13}CO_2$-Meßkanal kein sinnvolles Ergebnis liefern würde. Für das Messen von Gasen, welche mit Wasserdampf gesättigt sind, ist desweiteren in besonderer Ausgestaltung vorgesehen, daß sowohl die Meßküvetten als auch die Detektoren beheizt werden. Dies ist aus dem Grund sinnvoll, da die Meßanordnung eine Querempfindlichkeit zu Wasserdampf ausweist. Diese Querempfindlichkeit ist durch diese Beheizungsmaßnahme unterbunden.

Das elektrische Ausgangssignal des Detektors E2 wird zu einem Verstärker V2 geführt. Der Ausgangswert des Verstärkers V2 wird hierbei auf die Meßsignalauswertung von E1 aufgeschaltet, in dem eine Offset-Änderung, und zusätzlich eine Drehung, das heißt eine Veränderung des Verstärkungsfaktors vorgenommen wird. Diese elektronische Kompensation kann durch eine entsprechende Schaltung, aber auch durch die in der Beschreibung zu Figur 1 dargestellten Weise Softwaregestützt erfolgen.

**Patentansprüche**

1. Verfahren zur selektiven Bestimmung eines Isotopenanteiles $^*A_xB_y$ eines Meßgases $A_xB_y$ mittels nichtdispersiver Infrarotspektroskopie. wobei in einem 1. Strahlengang auf die Isotopenkomponente $^*A_xB_y$ sensibilisiert und in einem 2. Strahlengang auf das isotopenreine Meßgas $A_xB_y$ sensibilisiert gemessen wird, und die Meßergebnisse elektronisch verstärkt werden,
da'durch gekennzeichnet,
daß in dem 1. Strahlengang eine zusätzliche optische Filterung durch ein im wesentlichen mit isotopenreinem Meßgas $A_xB_y$ gefülltes Filter (FK) vorgenommen wird. und daß der elektronische Meßwert des 2. Strahlenganges unter Einflußnahme auf den Verstärkungsfaktor und einen Offset in die elektronische Verstärkung des 1. Strahlenganges eingeht.

2. Verfanren zur selektiven Bestimmung eines Isotopenanteiles nach Anspruch 1,
dadurch gekennzeichnet,
daß die Elemente des Meßgasmoleküles A = Kohlenstoff (C), B = Sauerstoff (O) und die stöchiometrischen Indices X = 1 und y = 2 sind, und daß das Isotop $^*A$ das Kohlenstoffisotop $^{13}C$ ist.

3. Verfahren zur selektiven Bestimmung eines Isotopenanteiles nach Anspruch 1 und 2,
dadurch gekennzeichnet,
daß im 1. und im 2. Strahlengang das Meßgas mitsamt dem darin enthaltenen Isotopenanteil über nahezu die volle Längserstreckung von in den Strahlengängen vorgesehenen Meßküvetten unter permanenter Durchströmung hindurchgeführt wird, und daß das im 1. Strahlengang vorgesehene Filter im wesentlichen mit dem isotopenreinen Meßgas gefüllt und hermetisch abgeschlossen wird.

4. Nichtdispersives Infrarotspektrometer mit einem ersten und einem zweiten Strahlengang bestehend aus jeweils einem Infrarotstrahler -S1, S2), einer Meßküvette (K1, K2) und einem Detektor (E1, E2), und mit Verstärker (V1, V2), welche am Ausgang ein elektrisches Ausgangssignal liefern, dadurch gekennzeichnet, daß zur selektiven Bestimmung eines Isotopenanteils $*A_xB_y$ eines Meßgases $A_xB_y$ zwischen der Meßküvette (K1) und dem Detektor (E1) des 1. Strahlenganges zusätzlich eine im wesentlichen mit dem isotopenreinen Meßgas $A_xB_y$ gefüllte Filterküvette (FK) angeordnet und der nachgeordnete Detektor (E1) auf das anteilsmäßig zu erfassende Isotop $*A_xB_y$ sensibilisiert ist, und der Detektor (E2) des zweiten Strahlenganges auf das isotopenreine Meßgas $A_xB_y$ sensibilisiert ist.

5. Nichtdispersives Infrarotspektrometer nach Anspruch 4, dadurch gekennzeichnet, daß zur Kalibrierung vor den Detektor (E1) des ersten Strahlenganges eine mit einer Gasmischung aus dem anteilsmäßig zu erfassenden Isotop des Meßgases und einem Inertgas gefüllte Kalibrierküvette (CC1) einbringbar ist.

6. Nichtdispersives Infrarotspektrometer nach Anspruch 5, dadurch gekennzeichnet, daß zur Kalibrierung vor den Detektor (E2) des zweiten Strahlenganges eine mit einer Gasmischung aus dem isotopenreinen Meßgas und einem Inertgas gefüllte Kalibrierküvette (CC2) einbringbar ist.

7. Nichtdispersives Infrarotspektrometer nach einem oder mehreren der vorhergehenden Ansprüche, dadurch gekennzeichnet, daß die Detektoren (E1, E2) als optopneumatische Detektoren ausgebildet sind.

8. Nichtdispersives Infrarotspektrometer nach Anspruch 7, dadurch gekennzeichnet, daß der Detektor (E1) des ersten Strahlenganges mit einer Mischung aus Edelgas und dem nachzuweisenden Isotop des Meßgases befüllt ist.

9. Nichtdispersives Infrarotspektrometer nach den Ansprüchen 7 und 8, dadurch gekennzeichnet, daß der Detektor (E2) des zweiten Strahlenganges aus einer Mischung aus Edelgas und dem isotopenreinen Meßgas befüllt ist.

10. Nichtdispersives Infrarotspektrometer nach einem oder mehreren der vorhergehenden Ansprüche, dadurch gekennzeichnet, daß das Meßgas im wesentlichen aus einer Mischung der isotopenreinen Meßgaskomponente $^{12}CO_2$ und dem Isotop $^{13}CO_2$ des Meßgases besteht.

11. Nichtdispersives Infrarotspektrometer nach einem oder mehreren der vorhergehenden Ansprüche, dadurch gekennzeichnet, daß als Edelgas Argon eingesetzt ist.

12. Nichtdispersives Infrarotspektrometer nach einem oder mehreren der vorhergehenden Ansprüche dadurch gekennzeichnet, daß als Inertgas $N_2$ eingesetzt ist.

13. Nichtdispersives Infrarotspektrometer nach einem oder mehreren der vorhergehenden Ansprüche, dadurch gekennzeichet, daß die Kalibriermittel bzw. die Gasmischungen der Kalibrierküvetten hermetisch abgeschlossen in die Kalibrierküvetten (CC1,CC2) eingebracht sind.

14. Nichtdispersives Infrarotspektrometer nach einem oder mehreren der vorhergehenden Ansprüche, dadurch gekennzeichnet, daß das Prüfgas parallel im Bereich des infrarotsenderseitigen Endes in den jeweiligen Meßstrahlengang der beiden Meßküvetten (K1,K2) einbringbar und im Bereich des detektorseitigen Endes parallel aus den Meßküvetten austritt.

15. Nichtdispersives Infrarotspektrometer nach Anspruch 14, dadurch gekennzeichnet, daß am gasausgangsseitigen Ende der Meßküvetten eine Saugpumpe zur Aufrechterhaltung der Durchströmung des Meßgases vorgesehen ist.

16. Nichtdispersives Infrarotspektrometer nach einem oder mehreren der Ansprüche 1 bis 13, dadurch gekennzeichnet, daß die Durchströmung der Meßküvetten über eine Druckpumpe erfolgt.

17. Nichtdispersives Infrarotspektrometer nach Anspruch 15 oder 16, dadurch gekennzeichnet, daß ein Mischreservoir (R1) für das zu messende Gas vorgesehen ist, welches den Meßküvetten (K1,K2) vorgeschaltet ist.

18. Nichtdispersives Infrarotspektrometer nach einem oder mehreren der vorhergehenden Ansprüche, dadurch gekennzeichnet daß die Meßküvetten (K1,K2) sowie die Detektoren (E1,E2) beheizbar sind.

## Claims

1. Process of selective determination of an isotope content $*A_xB_y$ of a measurement gas $A_xB_y$ by means of non-dispersive infra-red spectroscopy, whereby, in a first stage of radiation, an isotope constituent $*A_xB_y$ is measured sensitized, and in a second stage of radiation, a measurement gas $A_xB_y$, which contains no isotope, is measured sensitized, and measurements are electronically amplified, characterized in that in a first stage of radiation, additional optical filtering is carried out by a filter which is substantially filled with a measuring-gas $A_xB_y$ which is free of an isotope concerned, and in that an electronic measurement, of a second stage of radiation, as affected by an amplification factor and an offset, goes into an electronic amplification of a first radiation stage.

2. Process for selective determination of an isotope content in accordance with claim 1, characterized in that elements of a measurement gas molecule are A = carbon (C), B = oxygen (O) and stoichiometric indices are X = 1 and V = 2, and an isotope *A is a carbon isotope $^{13}C$.

3. Process for selective determination of an isotope content in accordance with claims 1 and 2, characterized in that in a first and second stage of radiation, a measurement gas, together with an isotope contained in it, permanently flows through nearly a whole length of measuring trays provided in radiation stages, and in that a filter, provided in a first stage of radiation, is substantially filled with an isotope-free measurement gas and is hermetically closed off.

4. Non-dispersive infra-red spectrometer with a first and a second stage of radiation comprising in each case an infra-red radiating means (51, 52), a measuring tray (K1, K2) and a sensor (E1, E2), and with amplifiers (V1, V2) which supply an electric output signal at an output, characterized in that, to selectively determine an isotope content $*A_xB_y$ of a measurement gas $A_xB_y$, a filter-tray (FK), filled with an isotope-free measurement gas $A_xB_y$, is additionally disposed between a measuring-tray (K1) and a detector (E1) of a first stage of radiation, and a subsequent detector (E1) is sensitized to an isotope content $*A_xB_y$ to be recorded, and a detector (E2) of a second stage of radiation is sensitized to an isotope-free measurement-gas $A_xB_y$.

5. Non-dispersive infra-red spectrometer in accordance with claim 4, characterized in that, for calibration, a calibration-tray (CC1), filled with a mixture of an isotope content of a measurement-gas and an inert gas, can be introduced in front of a detector (E1) of a first stage of radiation.

6. Non-dispersive infra-red spectrometer in accordance with claim 5, characterized in that, for calibration, a calibration-tray (CC2), filled with a mixture of an isotope-free measurement-gas and an inert gas, can be introduced before a sensor (E2) of a second stage of radiation.

7. Non-dispersive infra-red spectrometer in accordance with one or several of preceding claims, characterized in that sensors (E1, E2) are developed as optopneumatic sensors.

8. Non-dispersive infra-red spectrometer in accordance with claim 7, characterized in that a sensor (E1) of a first radiation stage is filled with a mixture of inert gas and an isotope, of a measurement-gas, to be detected.

9. Non-dispersive infra-red spectrometer in accordance with claims 7 and 8, characterized in that a sensor (E2) of a second radiation stage is filled with a mixture of inert gas and a measurement-gas which is free of isotope.

10. Non-dispersive infra-red spectrometer in accordance with one or several of preceding claims, characterized in that a measurement-gas substantially comprises a combination of isotope-free measurement-gas constituents $^{12}CO_2$ and an isotope $^{13}CO_2$ of a measurement-gas.

11. Non-dispersive infra-red spectrometer in accordance with one or several of preceding claims, characterized in that argon is used as an inert gas.

12. Non-dispersive infra-red spectrometer in accordance with one or several of preceding claims, characterized in that

N$_2$ is used as an inert gas.

13. Non-dispersive infra-red spectrometer in accordance with one or several of preceding claims, characterized in that calibration means or gas combinations of calibration-trays are introduced hermetically closed off into said calibration-trays (CC1, CC2).

14. Non-dispersive infra-red spectrometer in accordance with one or several of preceding claims, characterized in that a test-gas can be introduced, in a parallel arrangement, into both of two measuring-trays (K1, K2), in an area of an infra-red transmitter-side end, in each stage of measurement-radiation, and a said test-gas flows out of said measurement-trays, in a parallel arrangement, in an area of a sensor-side end.

15. Non-dispersive infra-red spectrometer in accordance with claim 14, characterized in that a suction pump, for maintaining throughflow of a measurement-gas, is provided on a gas-outlet-side end of measurement-trays.

16. Non-dispersive infra-red spectrometer in accordance with one or several of claims 1 to 13, characterized in that throughflow through measurement-trays occurs by means of pressure-pumps.

17. Non-dispersive infra-red spectrometer in accordance with claim 15 or 16, characterized in that a mixing vessel (R1), which is connected in before measurement-trays (K1, K2), is provided for a gas to be measured.

18. Non-dispersive infra-red spectrometer in accordance with one or several of preceding claims, characterized in that measurement-trays (K1, K2) and sensors (E1, E2) can be heated.

**Revendications**

1. procédé pour déterminer de façon sélective le taux d'isotope *$A_xB_y$ d'un gaz de mesure $A_xB_y$, au moyen d'une spectroscopie infrarouge non dispersive, dans une première voie de rayonnement les composants d'isotope *$A_xB_y$ étant mesurés de façon sensibilisée, et dans une seconde voie de rayonnement le gaz de mesure pur en isotope $A_xB_y$ étant mesuré de façon sensibilisée, et les résultats des mesures étant amplifiés de façon électronique, caractérisé en ce que l'on réalise, dans la première voie de rayonnement, un filtrage optique supplémentaire, à travers un filtre (FK) rempli essentiellement de gaz de mesure pur en isotope $A_xB_y$, et en ce que la valeur de mesure électronique de la seconde voie de rayonnement est entrée dans l'amplification électronique de la première voie de rayonnement, en prenant en compte le facteur d'amplification et une compensation.

2. Procédé pour déterminer de façon sélective un taux d'isotope selon la revendication 1, caractérisé en ce que les éléments de la molécule de gaz de mesure sont A du carbone (C), B de l'oxygène (O) et les indices stochiométriques sont x = 1 et y = 2, et en ce que l'isotope *A est l'isotope du carbone $^{13}$C.

3. Procédé pour déterminer de façon sélective un taux d'isotope selon l'une des revendications 1 ou 2, caractérisé en ce que dans les première et seconde voies de rayonnement, le gaz de mesure, avec le taux d'isotope qui y est contenu, s'écoule dans un écoulement permanent sur à peu près toute l'extension longitudinale des cuvettes de mesure prévues dans les voies de rayonnement, et en ce que le filtre prévu dans la première voie de rayonnement est rempli essentiellement du gaz de mesure pur en isotope et est fermé de façon hermétique.

4. Spectromètre infrarouge non dispersif, comportant des première et seconde voies de rayonnement, constituées à chaque fois d'un émetteur infrarouge (S1,S2), d'une cuvette de mesure (K1,K2), et d'un détecteur (E1,E2), et des amplificateurs (V1,V2) qui fournissent à la sortie un signal de sortie électrique, caractérisé en ce que pour la détermination sélective d'un taux d'isotope *$A_xB_y$ d'un gaz de mesure $A_xB_y$, une cuvette de mesure (FK) remplie essentiellement avec le gaz de mesure pur en isotope $A_xB_y$ est agencée entre la cuvette de mesure (K1) et le détecteur (E1) de la première voie de rayonnement, et le détecteur (E1) agencé en aval est sensibilisé à l'isotope *$A_xB_y$, dont le taux doit être déterminé, et le détecteur (E2) de la seconde voie de rayonnement est sensibilisé au gaz de mesure pur en isotope $A_xB_y$.

5. Spectromètre infrarouge non dispersif selon la revendication 4, caractérisé en ce que pour le calibrage, une cuvette de calibrage (CC1) remplie par un mélange de gaz de l'isotope du gaz de mesure, dont le taux doit être déterminé, et d'un gaz inerte, peut être monté en amont du détecteur (E1) de la première voie de rayonnement.

6. Spectromètre infrarouge non dispersif selon la revendication 5,

caractérisé en ce que pour le calibrage, une cuvette de calibrage (CC2) remplie d'un mélange constitué du gaz de mesure pur en isotope et d'un gaz inerte, peut être montée en amont du détecteur (E2) de la seconde voie de rayonnement.

7. Spectromètre infrarouge non dispersif selon l'une ou plusieurs des revendications précédentes, caractérisé en ce que les détecteurs (E1,E2) sont réalisés sous forme de détecteurs optopneumatiques.

8. Spectromètre infrarouge non dispersif selon la revendication 7,
caractérisé en ce que le détecteur (E1) de la première voie de rayonnement est rempli d'un mélange de gaz noble et de l'isotope du gaz de mesure, à déterminer.

9. Spectromètre infrarouge non dispersif selon l'une des revendications 7 ou 8,
caractérisé en ce que le détecteur (E2) de la seconde voie de rayonnement est rempli d'un mélange de gaz noble et de gaz de mesure pur en isotope.

10. Spectromètre infrarouge non dispersif selon l'une ou plusieurs des revendications précédentes, caractérisé en ce que le gaz de mesure est constitué essentiellement d'un mélange des composants du gaz de mesure pur en isotope $^{12}CO_2$ et de l'isotope $^{13}CO_2$ du gaz de mesure.

11. Spectromètre infrarouge non dispersif selon l'une ou plusieurs des revendications précédentes, caractérisé en ce que l'on utilise de l'argon comme gaz noble.

12. Spectromètre infrarouge non dispersif selon l'une ou plusieurs des revendications précédentes, caractérisé en ce que l'on utilise $N_2$ comme gaz inerte.

13. Spectromètre infrarouge non dispersif selon l'une ou plusieurs des revendications précédentes, caractérisé en ce que les moyens de calibrage ou les mélanges de gaz des cuvettes de calibrage sont entrés de façon hermétiquement fermée, dans les cuvettes de calibrage (CC1,CC2).

14. Spectromètre infrarouge non dispersif selon l'une ou plusieurs des revendications précédentes, caractérisé en ce que le gaz d'analyse peut être entré parallèlement, dans la zone d'extrémité du côté de l'émetteur infrarouge, dans les voies de rayonnement de mesure correspondantes des deux cuvettes de mesure (K1,K2) et sort parallèlement des cuvettes de mesure dans la zone d'extrémité du côté du détecteur.

15. Spectromètre infrarouge non dispersif selon la revendication 14,
caractérisé en ce qu'à l'extrémité de sortie du gaz des cuvettes de mesure, on prévoit une pompe d'aspiration pour maintenir l'écoulement du gaz de mesure.

16. Spectromètre infrarouge non dispersif selon l'une ou plusieurs des revendications 1 à 13,
caractérisé en ce que l'écoulement des cuvettes de mesure est réalisé par l'intermédiaire d'une pompe de pression.

17. Spectromètre infrarouge non dispersif selon l'une des revendications 15 ou 16,
caractérisé en ce que l'on prévoit un réservoir de mélange (R1) pour le gaz à mesurer, qui est monté en amont des cuvettes de mesure (K1,K2).

18. Spectromètre infrarouge non dispersif selon l'une ou plusieurs des revendications précédentes, caractérisé en ce que les cuvettes de mesure (K1,K2), ainsi que les détecteurs (E1,E1,) peuvent être chauffés.

Fig.1

Fig.2

Fig.3

EP 0 584 897 B1